**Europäisches Patentamt**

**European Patent Office**

**Office européen des brevets**

(19)

(11) Veröffentlichungsnummer: **0 214 366**

**A2**

(12) # EUROPÄISCHE PATENTANMELDUNG

(21) Anmeldenummer: 86105220.7

(22) Anmeldetag: 16.04.86

(51) Int. Cl.⁴: **G 01 H 11/08**
G 01 N 11/16, G 01 B 7/12
G 01 N 3/38

(30) Priorität: 19.04.85 DE 3514679

(43) Veröffentlichungstag der Anmeldung:
18.03.87 Patentblatt 87/12

(84) Benannte Vertragsstaaten:
AT CH FR GB IT LI SE

(71) Anmelder: Kernforschungszentrum Karlsruhe GmbH
Weberstrasse 5 Postfach 3640
D-7500 Karlsruhe 1(DE)

(72) Erfinder: Gast, Theodor, Prof.Dr.Ing.
Bergstrasse 1
D-1000 Berlin 39(DE)

(72) Erfinder: Kramm, Karl U. Dipl.-Ing.
Prinzregentenstrasse 76
D-1000 Berlin 31(DE)

(54) **Einrichtung zur Bestimmung der Schwingungsparameter und deren Anwendung.**

(57) Die Erfindung betrifft eine Einrichtung zur Bestimmung der Schwingungsparameter eines longitudinal schwingenden Bandes, das durch einen piezoelektrischen Schwinger angeregt wird, und dessen Schwingungen empfangen und ausgewertet werden. Die Einrichtung zeichnet sich dadurch aus, daß der bzw. die piezoelektrischen Schwinger derart angeordnet und geschaltet sind, daß sie elektrisch im Gleichtakt oder im Gegentakt anregbar sind. Die erfundene Einrichtung kann insbesondere Anwendung finden zur Bestimmung der rheologischen Eigenschaften von Flüssigkeiten, wobei die Schwingungsdämpfung des Bandes in der Flüssigkeit über eine Amplitudenmessung bestimmt und die Eigenfrequenzänderung zur Ermittlung der elastischen Eigenschaften der Flüssigkeitsmasse benutzt wird. Die Einrichtung kann aber auch zur Bestimmung der chemischen Zusammensetzung eines Fluides verwendet werden, ferner zur Bestimmung der Füllstandshöhe einer Flüssigkeit in einem Behälter, zur Bestimmung des komplexen E-Moduls und des Young'schen Moduls, zur Messung des Durchmessers von Werkstücken oder des Abstandes zwischen zwei Kanten eines Werkstückes, und schließlich auch zur Messung der Dehnung eines Gegenstandes, wie z.B. einer Brücke oder eines Gebäudes oder dgl.

EP 0 214 366 A2

- 1 -

Die Erfindung betrifft eine Einrichtung zur Bestimmung der Schwingungsparameter eines longitudinal schwingenden Bandes, das durch einen piezoelektrischen Schwinger angeregt wird und dessen Schwingungen empfangen und ausgewertet werden.

Im Rahmen von Forschungsarbeiten sind Untersuchungen vorgenommen worden, inwieweit sich die Eigenfrequenz eines longitudinal schwingenden Bandes ändert, wenn dessen träge Masse variiert. Bei der hierfür verwendeten Versuchsanordnung bestanden Sender und Empfänger aus piezoelektrischen Schwingern, die sich in einem bestimmten Abstand gegenüberliegend angeordnet waren. Das Band zwischen den Schwingern wurde von Spannzangen gehalten, die jeweils mit einer scheibenförmigen Verdickung zwischen piezoelektrischen Schwingern eingespannt worden waren. Die Schwingungen des Senders übertragen sich über das Band und die zweite Zange auf den gegenüberliegenden piezoelektrischen Schwinger, der als Empfänger arbeitet und erzeugen dort ein Signal. Bei dieser Versuchsanordnung wurde die Frequenz des Senders so gesteuert, daß eine Phasenverschiebung von 90° zwischen der angeregten und empfangenden Wechselwirkung bestand, so daß sich eine stehende Welle mit Knoten in den Einspannungen bildete. Die Untersuchungen hatten ergeben, daß bspw. eine Erhöhung der Masse im mittigen Bereich des Bandes zu einer Abnahme der Amplitude führt und daß diese Amplitudenänderung als Meßwert herangezogen werden könnte. Es zeigte sich aber auch, daß ebenso die Frequenz beeinflußt wird und daß auch diese Frequenzänderung eine Meßgröße darstellen könnte.

Aus der Praxis ist eine Meßeinrichtung bekannt, die zur Bestimmung der Viskosität dient, wobei hier ebenfalls die Änderung der Amplitude einer in einem einseitig gehaltenen schwingenden Metallblatt als Meßgröße herangezogen wird.

Nachteilig bei einer derartigen Ausführung, die an sich nachträglich in bspw. Rohrsysteme oder Behälter einsetzbar ist, ist, daß das Blatt, das als Meßfühler dient, sehr empfindlich ist und bei mechanischen Beanspruchungen leicht zerstört werden kann.

Aufgabe der Erfindung ist es, eine Einrichtung zur Bestimmung der Schwinungsparameter eines longitudinal schwingenden Bandes zu schaffen, die in der Praxis, d.h. im täglichen Betrieb einsetzbar ist, und zwar auch nachträglich in bestehende Systeme wie Rohrleitungen, Behälter und dergleichen eingebaut werden kann, ohne daß es einer wesentlichen Änderung der Anlage, in die diese Einrichtung eingesetzt wird, bedarf. Gleichzeitig soll die Einrichtung in der Lage sein, verschiedene Meßgrößen zu liefern, also nicht allein auf eine Viskositätsmessung beschränkt sein.

Gelöst wird diese Aufgabe erfindungsgemäß mit den Merkmalen im Kennzeichen des Anspruchs 1 bzw. durch die Anwendungen gemäß den Ansprüchen 9 bis 18.
Vorzugsweise Weiterbildungen ergeben sich aus den Unteransprüchen 2 bis 8.

Das piezoelektrisch angeregte Band schwingt in seiner Eigenfrequenz. Die am Band haftende Masse nimmt an der Schwingung teil und verändert dessen Eigenfrequenz. Die erste Eigenfrequenz des Bandes ergibt sich aus der Beziehung

$$f_o = 1/2 \ 1 \ \sqrt{E/\rho}$$

0214366

Bei einer gleichmäßig über die Bandlänge verteilten Masse folgt für deren Betrag

$$M = m \ (f_o^2/f_m^2 - 1),$$

wobei $f_m$ = Frequenz mit M = aufgebrachte Masse und m = Bandmasse bedeuten.

Wegen eventueller elastischer Eigenschaften der aufgebrachten Masse ist es jedoch sinnvoll, das Band nur im mittleren Teil zur Massenbestimmung zu nutzen.

Voraussetzung für den praktischen Einsatz der erfindungsgemäßen Einrichtung war es, zunächst sicherzustellen, daß eine einwandfreie Schwingung erzeugt werden konnte, die dann auch eine sichere Auswertung der empfangenen Signale zuließ. Erreicht wurde dies durch die Anordnung und Schaltung der Schwinger derart, daß sie im Gleichtakt oder im Gegentakt elektrisch anregbar sind.

Weiterhin war es notwendig, die Einrichtung so zu konstruieren, daß eine direkte Übertragung von Schwingungen aus der Halterung des Bandes vermieden wird, d.h. nicht zu Verfälschungen des Meßergebnisses führen kann. Hierzu wurde eine Anordnung gewählt, bei der die sich gegenüberliegenden piezoelektrischen Schwinger bzw. deren Halter durch Dämmittel daran gehindert wurden, daß ein Körperschallübergang erfolgt.

Gemäß Anspruch 7 sind bei der erfindungsgemäßen Einrichtung zwei Schwinger vorgesehen, von denen der eine als Sender und der andere als Empfänger geschaltet ist. Dies ist zweckmäßig bei großer innerer Banddämpfung mit entsprechend kleiner Empfangsamplitude.

Bei kleineren inneren Dämpfungen des Bandes kann das Sender- und Empfängersystem zu einem einzigen, wie im Anspruch 8 angegebenen System, zusammengefaßt werden, wobei die Piezoscheiben alternierend als Sender und Empfänger geschaltet werden. Der Körperschall wird durch das Band geleitet und am Bandende reflektiert,

- 4 -

z.B. an einem Widerlager. Es kann je nach Anwendung eine stehende Welle beliebiger Ordnung im Band angeregt werden.

Mit der Ausführung nach Anspruch 9 wird erreicht, daß der spannungsführende Belag in einem großen Bogen für die Anregung und einem kleinen Bogen für die Signalabnahme aufgetrennt wird. Um Übersprechen zu verhindern, kann zwischen die Elektroden ein geerdeter Schutzbelag eingeschoben werden.

Mit dieser vorbeschriebenen Anordnung bzw. Ausbildung der Einrichtung ist es nun möglich, diese Einrichtung für die verschiedensten Meßzwecke einzusetzen, wobei gemäß den Merkmalen der Ansprüche 10 bis 19 als Anwendungszwecke je nach Art des verwendeten Bandes z.B. die Viskositätsmessung von Flüssigkeiten, die Bestimmung von Flüssigkeiten, die Bestimmung von Staubkonzentrationen z.B. in Rauchabgasen von Kraftwerken, wie auch die Feuchtigkeitsbestimmung in Gasen usw. möglich ist. Aufgrund dieser Vielfalt der Einsatzmöglichkeiten weist die erfindungsgemäße Einrichtung einen erheblichen Vorteil gegenüber den bekannten Meßeinrichtungen auf.

Gemäß Anspruch 10 kann die Einrichtung zur Bestimmung der rheologischen Eigenschaften von Flüssigkeiten dienen.

Die äußere Dämpfung verändert die empfangene Amplitude und auch die Resonanzfrequenz. Als Kriterium für die Dämpfung wird die Halbwertsbreite der Resonanzkurve oder die Empfängersignalamplitude bei konstanter Anregung herangezogen. Es kann auch die für die konstante Empfangsamplitude erforderliche Anregungsspannung benutzt werden.

Auch Feststoffkonzentrationen in Fluiden können mit der erfindungsgemäßen Einrichtung bei Verwendung eines geeigneten Bandes bestimmt werden, wobei darauf zu achten ist, daß die am Band haftende Masse vollständig an der Schwingung teilnehmen muß, um Meßfehler auszuschließen. Wünschenswert ist deshalb eine besonders innige Verbindung zwischen der aufgebrachten Masse und dem Band.

Je nach Art des benutzten Bandes kann auch die Feuchtigkeit in Gasen oder eine bestimmte Zusammensetzung eines Fluids festgestellt werden. Dies wird erreicht, wenn das BAnd einer chemischen Reaktion unterliegt und somit sich die Stoffeigenschaften ändern oder die mitschwingende Masse sich durch Aufnahme oder Abgabe eines anderen Stoffes verändert (z.B. Wasseraufnahme zur Feuchtigkeitsmessung).

Mit der im Anspruch 16 beschriebenen Meßanordnung kann auch die innere Dämpfung des Bandes bestimmt werden. Der Imaginäranteil des komplexen E-Moduls beschreibt diese Dämpfung. Diese Einrichtung ist besonders zur Messung an Kunststoff- und Papierbändern geeignet.

Die Anwendung nach Anspruch 17 beruht darauf, daß sich an dem longitudinal schwingenden Band bei der ersten Eigenfrequenz Knotenpunkte (z.B. am Sender und Empfänger) ausbilden, während die Bandmitte relativ kleine Bewegungen ausführt. Nähert man nun senkrecht zur Bandachse einen Gegenstand dem Schwingungsbauch, dann ändert sich das Schergefälle dw/dy (w = Schallschnelle des Bandes und y = senkrechter Abstand vom Band) und damit die äußere Dämpfung des Bandes.

Schließlich ist es möglich, die Einrichtung für die Abstands- oder Durchmesserbestimmung zu benutzen. Hierbei gilt, daß für die Beziehung

$$f_o = 1/2 \ 1 \ \sqrt{E/\rho}$$

wobei 1 = Bandlänge, E = E-Modul und $\rho$ die Dichte des Bandes ist. Demnach ändert sich die Eigenfrequenz, wenn die Bandlänge variiert.

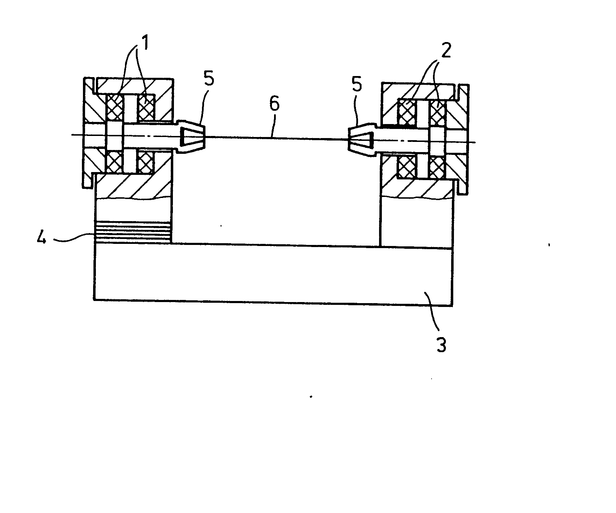

Lediglich kurz soll nachfolgend noch die Figur erläutert werden, die schematisch den Grundaufbau der Einrichtung zeigt.
Diese besteht aus sich gegenüberliegenden Piezo-Dickenschwingern 1, 2, die in diesem Fall in einem U-förmigen Rahmen 3 gelagert sind. Bei Einbau der

0214366

Einrichtung z.B. in eine Leitung oder einen Behälter kann dieser Rahmen entfallen, weil die Leitungs- oder Behälterwände selbst als Halterung benutzt werden. Die Schwingungsisolation 4 ist dann entsprechend in den Wänden vorzusehen. Die Schwinger 1, 2 sind mit Spannzangen 5 versehen, zwischen denen das in Schwingungen zu versetzende Band 6 gespannt ist. An diesem Band vorbei bewegt sich das Medium, an oder in dem die Messung durchgeführt werden soll. Die Elektronik zur Anregung und zur Auswertung der Schwingungen ist nicht dargestellt.

---

Einrichtung zur Bestimmung der Schwingungsparameter
und deren Anwendung

---

Patentansprüche:

1. Einrichtung zur Bestimmung der Schwingungsparameter
eines longitudinal schwingenden Bandes, das durch einen
piezoelektrischen Schwinger angeregt wird und dessen
Schwingungen empfangen und ausgewertet werden,
d a d u r c h  g e k e n n z e i c h n e t,
daß der oder die piezoelektrischen Schwinger derart
angeordnet und geschaltet sind, daß sie elektrisch im
Gleichtakt oder im Gegentakt anregbar sind.

2. Einrichtung nach Anspruch 1,
d a d u r c h  g e k e n n z e i c h n e t,
daß der Körperschallübergang von der Halterung auf die
Wandung der Einrichtung bzw. die die Schwinger
aufnehmende Wandung eines Behälters oder dgl. durch
Dämmittel unterdrückbar ist.

3. Einrichtung nach Anspruch 2,
d a d u r c h  g e k e n n z e i c h n e t,

- 2 -

daß die Dämmittel aus einer entsprechend ausgewählten Legierung hoher Dämpfung bestehen.

4. Einrichtung nach Anspruch 2,
d a d u r c h   g e k e n n z e i c h n e t ,
daß als Dämmittel eine abrupte Querschnittsänderung dient.

5. Einrichtung nach Anspruch 2,
d a d u r c h   g e k e n n z e i c h n e t ,
daß als Dämmittel ein rechtwinkliger oder winkliger Materialübergang dient.

6. Einrichtung nach Anspruch 2,
 d a d u r c h   g e k e n n z e i c h n e t ,
daß die Dämmittel aus einer Membranfeder bestehen, über die die Halter der Schwinger in der Wandung der Einrichtung bzw. der die Schwinger aufnehmenden Wandung eines Behälters oder dgl. gelagert sind.

7. Einrichtung nach den Ansprüchen 1 bis 6,
d a d u r c h   g e k e n n z e i c h n e t ,
daß zwei Schwinger vorgesehen sind, von denen der eine als Sender und der andere als Empfänger geschaltet ist.

8. Einrichtung nach den Ansprüchen 1 bis 6,
d a d u r c h   g e k e n n z e i c h n e t ,
daß ein Schwinger vorgesehen ist, der alternierend als Sender und Empfänger geschaltet ist.

9. Einrichtung nach den Ansprüchen 1 bis 6 und 8,
d a d u r c h   g e k e n n z e i c h n e t ,

daß der Schwinger aus einem Keramikschwinger besteht, dessen spannungsführender Belag einseitig mit Schlitzen versehen ist, die den Belag in einen größeren Sendebelag und einen kleineren Empfangsbelag aufteilen.

10. Anwendung der Einrichtung nach den Ansprüchen 1 bis 9 zur Bestimmung der rheologischen Eigenschaften von Flüssigkeiten mit der Maßgabe, daß das in die Flüssigkeit eintauchende Band aus einem dünnen, gegenüber der Flüssigkeit inerten Material besteht und die Schwingungsdämpfung des Bandes in der Flüssigkeit über eine Amplitudenmessung bestimmt und die Eigenfrequenzänderung zur Ermittlung der elastischen Eigenschaften und der mitschwingenden Flüssigkeitsmasse herangezogen wird.

11. Anwendung nach Anspruch 10,
d a d u r c h  g e k e n n z e i c h n e t ,
daß als Kriterium die Halbwertsbreite oder die Amplitude dient.

12. Anwendung der Einrichtung nach den Ansprüchen 1 bis 9 zur Bestimmung der Feststoffkonzentration in Fluiden mit der Maßgabe, daß das Band aus einem Material besteht, auf dem der Feststoff haftet oder als Filter ausgebildet ist.

13. Anwendung der Einrichtung nach den Ansprüchen 1 bis 9 zur Bestimmung der Feuchtigkeit in Gasen mit der Maßgabe, daß das Band hygroskopisch ist oder aus einem inerten Material besteht, auf das eine hygroskopische Schicht aufgebracht worden ist.

14. Band nach Anspruch 13,
d a d u r c h   g e k e n n z e i c h n e t,
daß es aus einem hygroskopischen Kunststoff besteht.

15. Anwendung der Einrichtung nach den Ansprüchen 1 bis 9 zur Bestimmung der chemischen Zusammensetzung eines Fluides mit der Maßgabe, daß das BAnd aus einem mit dem Fluid chemisch reagierenden und daher eine Änderung einer Stoffeigenschaft des Bandes bewirkenden Material besteht oder aus einem inerten Material, auf das eine entsprechende Schicht aufgebracht worden ist.

16. Anwendung der Einrichtung nach den Ansprüchen 1 bis 9 zur Bestimmung der Füllstandshöhe mit der Maßgabe, daß das Band senkrecht zum Flüssigkeitsspiegel in einem Behälter ausgespannt ist.

17. Anwendung der Einrichtung nach den Ansprüchen 1 bis 9 zur Bestimmung des komplexen E-Moduls und des Young'schen Moduls, wobei das zu messende Band mit einer konstanten Last gespannt wird und Einrichtungen zur Messung der jeweiligen Bandlänge (zwischen den Spannmitteln für das Band) vorgesehen sind.

18. Anwendung der Einrichtung nach Anspruch 1 bis 9 zum Antasten von Werkstücken zum Zweck der Messung, z.B. des Durchmessers von Werkstücken oder des Abstandes zwischen zwei Kanten eines Werkstückes mit der Maßgabe, daß die Dämpfung des Bandes durch dessen Annäherung an das Werkstück herangezogen wird.

19. Anwendung der Einrichtung nach Anspruch 1 bis 9 zur Messung der Dehnung mit der Maßgabe, daß die Einrichtung an dem zu messenden Gegenstand, z.B. einem

- 5 -

Gebäude oder einer Brücke angebracht ist, und die Änderung der Eigenfrequenz bzw. Resonanzfrequenz gemessen wird.